Europäisches Patentamt

European Patent Office

Office européen des brevets

(19)

(11) Veröffentlichungsnummer: **0 008 465**
**B1**

(12) **EUROPÄISCHE PATENTSCHRIFT**

(45) Veröffentlichungstag der Patentschrift :
11.11.81

(51) Int. Cl.³ : **A 47 J 27/09**, F 16 K 17/04,
F 16 K 37/00

(21) Anmeldenummer : 79103117.2

(22) Anmeldetag : 23.08.79

(54) **Sicherheitsventil für einen Dampfdruckkochtopf.**

(30) Priorität : 25.08.78 DE 2837188

(43) Veröffentlichungstag der Anmeldung :
05.03.80 (Patentblatt 80/05)

(45) Bekanntmachung des Hinweises auf die Patenterteilung : 11.11.81 Patentblatt 81/45

(84) Benannte Vertragsstaaten :
**AT CH FR GB IT NL SE**

(56) Entgegenhaltungen :
**CH - A - 252 507**
**DE - C - 296 631**

(73) Patentinhaber : WRTTEMBERGISCHE METALLWA-
RENFABRIK AG.
Postfach 76
D-7340 Geislingen/Steige (DE)

(72) Erfinder : Roth, Eberhard
Kirchstrasse 47
D-7901 Lonsee-Urspring (DE)

(74) Vertreter : Patentanwälte Dipl.-Ing. A. Grünecker,
Dr.-Ing. H. Kinkeldey, Dr.-Ing. W. Stockmair, et al
Dr. rer. nat. K. Schumann, Dipl.-Ing. P.H. Jakob, Dr.
rer. nat. G. Bezold Maximilianstrasse 43
D-8000 München 22 (DE)

Imprimerie Jouve, 17, rue du Louvre, 75001 Paris, France

## Sicherheitsventil für einen Dampfdruckkochtopf

Die Erfindung bezieht sich auf ein Sicherheitsventil für einen Dampfdruckkochtopf, mit einem Ventilsitz in einem Ventilgehäuse, mit einem oder mehreren Zuströmkanälen auf einer Seite und einem oder mehreren Abströmkanälen auf der anderen Seite des Ventilsitzes, und mit einem in Richtung auf den Ventilsitz verstellbar federbelasteten Ventilkörper, der unter dem Innendruck nach Überwindung der Federbelastung vom Ventilsitz abhebt, sowie mit einer Drossel im Strömungsweg des Ventils.

Bei einem bekannten Sicherheitsventil dieser Art (CH-A 252 507) ist die Drosselstelle durch einen ringförmigen Wulst gebildet, der sich auf der Abströmseite des Ventilsitzes um den Ventilkörper erstreckt. Dieser ringförmige Wulst bildet mit der Wand des Ventilgehäuses eine Drosselstelle, die das Abströmen des Dampfes konstant, also unabhängig vom Innendruck und von der Größe der Ventilöffnung, drosselt.

Ein ähnliches Sicherheitsventil ohne Drosselstelle ist aus der DE-A 1 264 710 bekannt. Sein Ventilgehäuse ist beidseits des Ventilsitzes mit zylindrischer Innenwandung ausgebildet, wobei der Durchmesser der Abströmseite größer ist als der den Zuströmkanal bildende Bereich. Der Übergang zwischen den beiden Innendurchmessern erfolgt in Form einer konischen Ringfläche, deren engster Bereich den Ventilsitz bildet. Anschließend an den weitesten Teil der Ringfläche weist der Ventilkörper Ausströmöffnungen auf. Am Ventilsitz liegt der rohrförmig ausgebildete Ventilkörper unter dem Druck einer Schraubenfeder an, die sich einerseits auf einer äußeren Abstufung des Ventilkörpers, andererseits an der Innenseite einer Ventilkappe abstützt, die auf dem Ventilkörper schraubbar ist. Im Inneren des rohrförmigen Ventilkörpers ist längsverschieblich ein Signalkolben angeordnet, dessen Schaft in unterschiedlichen Abständen mit Ringnuten versehen ist. Der Signalkolben wird durch eine sich einerseits am oberen Innenrand des Ventilkörpers, andererseits auf einer Ringschulter des Signalkolbens abstützende Feder in unbelastetem Zustand in einer Ruhestellung gehalten, bei welcher ein Teil seines Schaftes aus dem Ventilkörper im Bereich des Ventilkegels hindurch in den Zuströmkanal ragt. Die den Ventilkörper belastende Schraubenfeder ist wesentlich stärker als die auf den Signalkolben wirkende Federkraft, so daß bei Druckanstieg im Topf zunächst der Signalkolben im Ventilkörper verschoben wird, wobei sein topffernes Ende sich aus dem Ventilkörper herausbewegt und dort als optische Anzeige den Druckanstieg signalisiert. Kurz ehe der Druck im Topf eine Höhe erreicht, welche zum Abheben des Ventilkörpers gegen die Kraft der mittels der Ventilkappe eingestellten Federkraft führt, kann der Dampf über die Ringabschnitte des Kolbenschaftes und entsprechende Ausfräsungen an der Innenwand des Ventilkörpers eine Pfeifenbohrung des Signalkörpers erreichen und ein akustisches Signal geben. Wird dieses nicht beachtet, d.h. die Wärmezufuhr zum Topf nicht gedrosselt, erreicht der Dampfdruck den eingestellten Maximalwert und hebt den Ventilkörper vom Ventilsitz ab. Zwischen dem Ventilkegel und dem sich in Strömungsrichtung erweiternden konischen Ringraum des Ventilgehäuses kann der Dampf ungehindert zu den Auslaßöffnungen und ins Freie strömen. Dabei ist der Ausströmquerschnitt um so größer, je höher der Maximaldruck ist, d.h. je höher der Ventilkörper im Vergleich zu dem sich erweiternden Ringraum angehoben ist. Das rasche Ausströmen hat einen starken Druckabfall im Kochtopf zur Folge, der zum Aufschäumen der Speisen führt. Insbesondere bei starkschäumenden Speisen besteht die Gefahr, daß der ausströmende Dampf Kochgut mitreißt, welches den Topf und den Herd beschmutzt und auch den Dampfweg im Inneren des Ventilkörpers verunreinigt. Hausfrauen sind oft auch nicht geduldig genug abzuwarten, bis der Dampfdruck im Topfinneren durch Abkühlen abgebaut ist. Sie reißen das Sicherheitsventil auf, um den Topf schlagartig « abzudampfen ». Ein zu intensiver Dampfaustritt kann dabei zu einem Unfall führen oder auch durch die Schreckwirkung zu einer unbeabsichtigten Reaktion der Hausfrau führen.

Der Erfindung liegt die Aufgabe zugrunde, ein Sicherheitsventil der eingangs beschriebenen Art mit einfachen Mitteln so auszugestalten, daß die Drosselwirkung auf den abströmenden Dampf um so stärker ist, je größer der Innendruck zum Zeitpunkt des Sicherheitsöffnens oder gewollten Öffnens des Ventils ist.

Diese Aufgabe wird erfindungsgemäß dadurch gelöst, daß im Zuströmkanal ein gegen Federkraft durch den Innendruck in Strömungsrichtung verstellbarer Drosselkörper angeordnet ist, der mit der Wandung des Zuströmkanals die Drossel bildet, wobei der Drosselkörper und/oder die Wandung eine derartige Form aufweisen, daß mit zunehmender Verschiebung des Drosselkörpers in Strömungsrichtung die Drosselwirkung kontinuierlich und/oder stufenweise zunimmt.

Bei dem erfindungsgemäßen Sicherheitsventil wird der Drosselkörper durch den Innendruck relativ zur Wandung des Zuströmkanals innerhalb gewisser Grenzen verschoben. Durch die Form des Drosselkörpers bzw. des Zuströmkanals ergibt sich eine Erhöhung der Drosselwirkung, je weiter der Drosselkörper durch den Innendruck in Strömungsrichtung verschoben ist. Je höher also der Druck ist ; bei dem das Sicherheitsventil öffnet oder von der Hausfrau geöffnet wird, desto stärker wird das Abströmen des Dampfes gedrosselt. Dadurch wird ein schlagartiges Ausströmen von unter hohem Druck stehendem Dampf und ein Mitreißen von Speiseteilen auf einfache Weise verhindert.

Vorteilhafterweise ist die kontinuierliche oder stufenweise Zunahme der Drosselwirkung durch entsprechende Verengung des Zuströmkanals und/oder Verjüngung des Drosselkörpers dargestellt. Die gewünschte Wirkung läßt sich so mit besonders einfachen baulichen Maßnahmen erreichen.

Bei einem Sicherheitsventil, das in bekannter Weise einen im Ventilkörper durch ansteigenden Dampfdruck gegen eine Feder verschieblichen Signalkolben aufweist, ist nach einer Weiterentwicklung der Erfindung vorgesehen, daß der Drosselkörper am Signalkolben angeordnet ist. Dem Signalkolben wird dadurch eine zweifache Funktion zugewiesen, was den Aufbau weiter vereinfacht.

Weitere vorteilhafte Ausbildungen der Erfindung sind aus den Ansprüchen 4 bis 6 erkenntlich und im nachfolgenden Ausführungsbeispiel beschrieben.

Die Erfindung wird nachfolgendanhand eines Ausführungsbeispieles näher beschrieben. Es zeigen :

Fig. 1 ein erfindungsgemäßes Sicherheitsventil eines Dampfdruckkochtopfes in einer Einstellung, bei der unter geringem Druck gekocht wird, wobei in der linken Hälfte die Stellung kurz von dem Öffnen und in der rechten Hälfte nach dem Öffnen dargestellt ist, und

Fig. 2 das Sicherheitsventil der Fig. 1 in einer Einstellung zum Kochen unter hohem Druck, wobei wiederum in der linken Hälfte die Stellung kurz vor dem Öffnen und rechts nach dem Öffnen dargestellt ist.

Das in den Figuren dargestellte Sicherheitsventil weist ein Ventilgehäuse 1 auf, das mittels einer Mutter 2 in einem nur angedeuteten Deckel 3 eines Dampfdrucktopfes gehalten ist. Ein Teil des hülsenförmigen, beidseitig offenen Ventilgehäuses ragt somit bei auf den Topf aufgesetztem Deckel in das Topfinnere hinein.

Im Inneren des Ventilgehäuses 1 ist ein als Ganzes mit 4 bezeichneter, im wesentlichen rohrförmiger Ventilkörper und in diesem ein als Ganzes mit 5 bezeichneter Signalkolben gelagert. Auf ein Außengewinde 6 des Ventilgehäuses 1 ist eine Ventilkappe 7 höhenverstellbar aufgeschraubt.

Das Ventilgehäuse 1 weist in seinem außerhalb des Deckels 3 befindlichen Innenraum einen Ventilsitz 8 in Form eines auf den Topf zu verjüngten Ringkonus aujf. Der sich oberhalb des Ventilsitzes 8 erweiternde Innenraum 1a des Ventilgehäuses steht mit der Umgebung durch eine Auslaßöffnung 9 in Verbindung.

Der Ventilkörper 4 ist im wesentlichen rohrförmig ausgebildet. Er stützt sich auf dem Ventilsitz 8 mit einem Ventilkegel 10 ab, der an einem Abschnitt 4a mit gegenüber dem übrigen Ventilkörper vergrößertem Außendurchmesser ausgebildet ist. Der Abschnitt 4a weist an seiner dem Ventilkegel 10 abgekehrten Seite eine Ringschulter 11 auf.

An seinem oberen, aus dem Ventilgehäuse herausragenden Ende weist der Ventilkörper ein Innengewinde 12 für eine eingeschraubte Ringmutter 13 auf.

Anschließend an die topfnahe Seite des Ventilkegels weist der Ventilkörper eine rohrförmige Verlängerung 4b auf, die sich etwa bis zum topfinneren Ende des Ventilgehäuses 1 erstreckt. Der Außendurchmesser dieser Verlängerung ist konstant und eng in das Ventilgehäuse eingepaßt. Der Innendurchmesser erweitert sich im Abstand vom Ende des Ventilkörpers in Form einer Stufe 14. Im Anschlußbereich der Verlängerung 4b an den Ventilkegel 10 sind am Ventilkörper 4 zwei einander gegenüberliegende Ausnehmungen 15 angebracht.

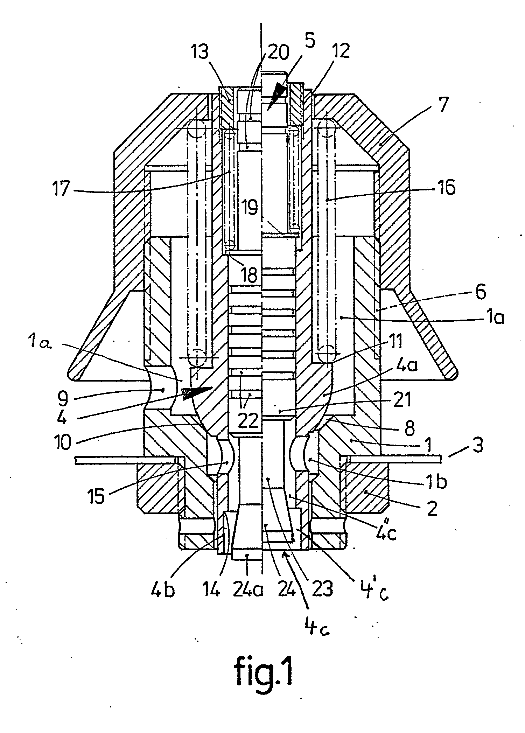

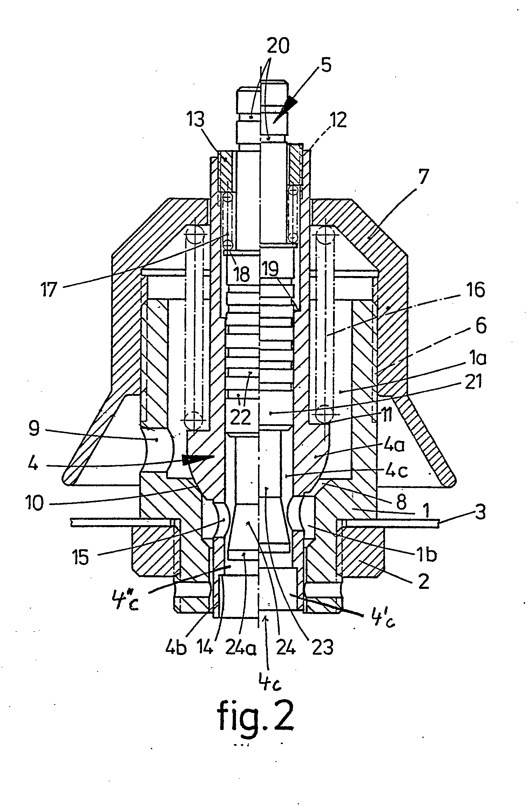

Der Ventilkörper 4 wird gegen den Ventilsitz mittels einer Schraubenfeder 16 gedrückt, die sich einerseits an der Ringschulter 11 des Ventilkörpers, andererseits an der oberen Innenfläche der Ventilkappe 7 abstützt. Die Vorspannung der Feder und damit der auf den Ventilkörper ausgeübte Anpreßdruck ist durch Höhenverstellen der Ventilkappe 7 veränderlich. Fig. 1 zeigt eine Stellung der Ventilkappe, in welcher die Schraubenfeder 16 schwach gespannt oder entspannt ist, Fig. 2 eine Stellung, in welcher die Schraubenfeder 16 stark gespannt ist. In der Stellung nach Fig. 1 öffnet das Sicherheitsventil also bereits unter sehr schwachem Innendruck im Kochtopf, während sich in Fig. 2 im Topf ein hoher Druck aufbauen kann, bevor das Ventil öffnet.

Der Signalkolben 5 ist im Inneren des Ventilkörpers 4 mit einer Feder 17 belastet, die sich einerseits an der dem Ventilinneren zugewandten Ringfläche der Ringmutter 13 abstützt, andererseits auf einem Ringvorsprung 18 des Signalkolbens.

In seiner in der linken Hälfte der Fig. 1 gezeigten unbelasteten Stellung liegt der Signalkolben 5 mit der der Feder 17 abgewandten Fläche seines Ringvorsprungs 18 an einer im Inneren des Ventilkörpers 4 gebildeten Schulter 19 unter dem Druck der Feder 17 an. Der sich vom Ringvorsprung 18 nach oben erstreckende, also innerhalb der Feder und der Ringmutter 13 befindliche Teil seines Schaftes weist im Abstand von seinem Ende und voneinander zwei Signalringe 10 auf. Der sich an die innere Seite des Ringvorsprunges 18 anschließende Schaftabschnitt 21 erstreckt sich in der in Fig. 1 links dargestellten Ruhestellung des Signalkolbens 5 etwa bis in die Höhe des Ventilsitzes 8 mit einem Durchmesser, der dem Innendurchmesser des ihn umgebenden Bereiches des Ventilkörpers 4 mit Gleitsitzpassung entspricht. Der Schaftabschnitt 21 weist eine Anzahl von im Abstand voneinander angeordneten Ringnuten 22 auf. Anschließend an den Schaftabschnitt 21 geht der Signalkolben 5 in einen zylindrischen Abschnitt 23 mit gegenüber dem Schaftabschnitt 21 verringertem Durchmesser über. An den zylindrischen Abschnitt 23 schließt sich zum Topfinneren hin ein mit dem Signalkolben einstückiger Drosselkörper 24 an, dessen Durchmesser sich vom zylindrischen Abschnitt 23 an konisch verbreitet bis zu einem zylindrischen Endbereich 24a.

Das geschilderte Sicherheitsventil arbeitet wie folgt :

Wenn sich in einem durch den Deckel 3 druckdicht verschlossenen Dampfdruckkochtopf ein Innendruck aufbaut, so kann der gespannte Dampf durch einen Zuströmkanal, der sich aus dem Innenraum 4c des Ventilkörperabschnittes 4b, den Ausnehmungen 15 im Ventilkörper und einem Innenraumbereich 1b des Ventilgehäuses zusammensetzt, bis zum Ventilkegel 10 strömen. Damit wirkt der Dampfdruck sowohl auf das topfseitige Ende des Signalkolbens 5, als auch auf den Ventilkörper 4.

Befindet sich das Ventil in der Einstellung nach Fig. 1, bei der die den Ventilkörper 4 belastende Feder 16 wenig oder gar nicht gespannt ist, so hebt bereits ein geringer Innendruck im Kochtopf den Ventilkegel 10 vom Ventilsitz 8 ab, so daß der Dampf durch den vom erweiterten Innenraum 1a und der Auslaßöffnung 9 gebildeten Abströmkanal nach außen entweichen und der Innendruck dadurch auf den Umgebungsdruck zurückfallen kann. In der linken Hälfte der Fig. 1 ist die Stellung kurz vor dem Abheben des Ventilkegels 10 gezeigt, während aus der rechten Hälfte ersichtlich ist, daß zwischen dem Ventilkegel 10 und dem Ventilsitz 8 ein Zwischenraum entstanden ist, durch den der Dampf entweichen kann. Die linke Hälfte der Fig. 1 zeigt also die relative Lage der Teile vor Aufbau eines zum Öffnen des Ventils führenden Innendrucks, während die rechte Hälfte den Zustand zeigt, der sich nach Aufbau dieses Innendrucks und Öffnen des Ventils ergibt.

Der Signalkolben 5 steht in der linken Hälfte der Fig. 1 unter der Wirkung der Feder 17 in seiner tiefsten Lage, da kein oder kein ausreichender Druck im Innenraum vorhanden ist, um ihn anzuheben. In der rechten Hälfte der Fig. 1 ist gezeigt, daß ein geringer Innendruck den Signalkolben 5 ein kleines Stück gegen die Kraft der Feder 17 im Ventilkörper 4 nach oben verschoben hat. Der Drosselkörper befindet sich mit seinem weiteren unteren Abschnitt im über die Stufe 14 nach unten erweiterten Teil 4'c des Innenraums 4c, der einen Teil des Zuströmkanals zum Ventilsitz bildet. In dieser Stellung wird, wie die rechte Hälfte der Fig. 1 deutlich zeigt, das Abströmen des Dampfes durch den Zuströmkanal 4c nur geringfügig gedrosselt. In dieser Stellung ist auch noch keiner der Signalringe 20 nach oben ausgetreten. Der Dampf entweicht beinahe ungedrosselt unter dem geringen Innendruck durch das Sicherheitsventil nach außen.

Soll in dem Topf unter höherem Innendruck gekocht werden, so wird die Ventilkappe 7 in die aus Fig. 2 ersichtliche Stellung nach unten geschraubt, in der die Feder 16 unter hoher Spannung steht. Mit entsprechend größerer Kraft wird der Ventilkegel 10 auf den Ventilsitz 8 gepreßt.

Solange der Innendruck den eingestellten Grenzwert nicht erreicht hat, befinden sich die Teile in der aus der linken Hälfte der Fig. 2 ersichtlichen Stellung. Der Ventilkegel 10 liegt noch am Ventilsitz 8 an, so daß kein Dampf entweichen kann. Der hohe Innendruck hat jedoch den Signalkolben 5 gegen die Kraft der Feder 17 nach oben geschoben. In der linken Hälfte der Fig. 2 tritt der zweite Signalring 20 gerade aus der Ringmutter 13 nach außen aus. Die Bedienungsperson erhält hierdurch den Hinweis, daß sich ein ausreichender Innendruck aufgebaut hat und die Wärmezufuhr verringert werden soll, um einen weiteren Druckanstieg zu verhindern. Geschieht dies nicht, so steigt der Druck im Topf weiter an, wodurch einerseits der Signalkolben die aus der rechten Hälfte der Fig. 2 ersichtliche äußere Endstellung erreicht und andererseits die Kraft der Ventilfeder 16 überwunden wird und der Ventilkegel 10 vom Ventilsitz 8 abhebt. Auch dies ist aus der rechten Hälfte der Fig. 2 ersichtlich.

Der Dampf kann nun durch die Öffnung zwischen dem Ventilsitz 8 und dem Ventilkegel 10 über den Abströmkanal 1b, 9 nach außen entweichen. Dabei ist jedoch der Drosselkörper 24 durch den starken Innendruck in der Verlängerung 4b nach oben über die Stufe 14 und damit in den engeren Innenraumbereich 4"c verschoben. Hier ist die Zwischenraum zwischen dem Drosselkörper und der Innenwandung der Verlängerung 4b so gering, daß eine erhebliche Drosselwirkung eintritt. Der unter hohem Druck stehende Dampf kann daher nur stark gedrosselt entweichen. Damit kann sich der Innendruck im Kochtopf nicht schlagartig, sondern nur allmählich absenken, wodurch ein Aufschäumen des Topfinhalts vermieden wird. Diese Wirkung tritt auch dann ein, wenn die Hausfrau zum raschen Abdampfen die Ventilkappe 7 aus der in Fig. 2 ersichtlichen Druckstellung rasch in eine Drucklos-Stellung nach oben verschraubt. Auch in diesem Fall bleibt der Drosselkörper unter der Wirkung des Innendruckes in der angehobenen Stellung, in der eine starke Drosselwirkung ausgeübt wird. Beim Abdampfen unter hohem Druck besteht also auch nicht die Gefahr eines schlagartigen Entweichens des Dampfes. Umgekehrt kann bei einem Abdampfen unter niedrigem Druck der Dampf im wesentlichen ungedrosselt entweichen, wie die rechte Hälfte der Fig. 1 zeigt.

Wie stark die Drosselwirkung jeweils ist, hängt von der Höhenstellung des Drosselkörpers 24 im abgestuften Innenraum 4c der Ventilkörperverlängerung 4b ab. Zwischen den aus den Fig. 1 und 2 ersichtlichen Stellungen gibt es noch Zwischenlagen, bei denen der Drosselkörper teils im weiteren Abschnitt 4'c und teils im engeren Abschnitt 4"c steht, wenn der Innendruck gerade ausreicht, um die jeweilige Einstellung der Ventilfeder 16 zu überwinden.

Abweichend vom dargestellten Ausführungsbeispiel kann der Ventilkörper mit dem Ventilkegel enden und der gesamte Zuströmkanal einschließlich des Drosselbereiches im Innenraum des Ventilgehäuses ausgebildet sein.

Der Drosselbereich des Zuströmkanals kann anstelle der Stufe 14 auch durch eine kontinuierliche Verengung des Querschnittes in Richtung auf den Ventilsitz zu gebildet sein. Ferner ist bei sich verengendem Kanal ein zylindrischer oder ein abgestufter Drosselkörper möglich.

Die übrige Ausbildung des Ventilkörpers, des Signalkolbens und des Ventilgehäuses, sowie der Ventilkappe, kann im Rahmen der Erfindung beliebig variieren.

## Ansprüche

1. Sicherheitsventil für einen Dampfdruckkochtopf, mit einem Ventilsitz (8) in einem Ventilgehäuse (1), mit einem oder mehreren Zuströmkanälen (4c, 15, 1b) auf einer Seite und einem oder mehreren Abströmkanälen (1a, 9) auf der anderen Seite des Ventilsitzes (8), und mit einem in Richtung auf den Ventilsitz (8) verstellbar federbelasteten Ventilkörper (4), der unter dem Innendruck nach Überwindung der Federbelastung (16) vom Ventilsitz (8) abhebt, sowie mit einer Drossel im Strömungsweg des Ventils, dadurch gekennzeichnet, daß im Zuströmkanal (4c, 15, 1b) ein gegen Federkraft durch den Innendruck in Strömungsrichtung verstellbarer Drosselkörper (24) angeordnet ist, der mit der Wandung (4b) des Zuströmkanals (4c) die Drossel bildet, wobei der Drosselkörper (24) und/oder die Wandung (4b) eine derartige Form aufweisen, daß mit zunehmender Verschiebung des Drosselkörpers (24) in Strömungsrichtung die Drosselwirkung kontinuierlich und/oder stufenweise zunimmt.

2. Sicherheitsventil nach Anspruch 1, dadurch gekennzeichnet, daß die kontinuierliche oder stufenweise Zunahme der Drosselwirkung durch entsprechende Verengung des Zuströmkanals (4c, 15, 1b) und/oder Verjüngung des Drosselkörpers (24) dargestellt ist.

3. Ventil nach Anspruch 1 oder 2 mit einem im Ventilkörper (24) durch ansteigenden Dampfdruck gegen eine Feder (17) verschieblichen Signalkolben (5), dadurch gekennzeichnet, daß der Drosselkörper (24) am Signalkolben (5) angeordnet ist.

4. Ventil nach Anspruch 3, dadurch gekennzeichnet, daß der Drosselkörper (24) mit dem Signalkolben (5) einstückig ist.

5. Ventil nach einem der Ansprüche 1 bis 4, dadurch gekennzeichnet, daß der Zuströmkanal (4c) wenigstens teilweise durch eine rohrförmige Verlängerung (4b) am Ventilkörper (4) gebildet ist, die mit geringem Spiel im Ventilgehäuse (1) geführt ist und die hinter der Drossel angeordnete, zum Ventilsitz (8) führende Ausnehmungen (15) aufweist.

6. Ventil nach Anspruch 3, mit einem im Ventilkörper (24) unter Gleitsitzpassung verschieblichen Schaftabschnitt (21) des Signalkolbens (5), dadurch gekennzeichnet, daß der Signalkolben (5) anschließend an das topfnahe Ende des Schaftabschnittes (21) einen Abschnitt (23) mit verringertem Durchmesser und von diesem ausgehend den sich verbreiternden Drosselkörper (24) auf-weist.

## Claims

1. Safety-valve for a steam pressure cooker, with a valve seat (8) in a valve housing (1), with one or more inflow passages (4c, 15, 1b) on one side and one or more outflow passages (1a, 9) on the other side of the valve seat (8), and with a valve body (4) adjustably spring-loaded in the direction towards the valve seat (8), which is raised from the valve seat (8) under the internal pressure after exceeding the spring loading (16), as well as with a throttle in the flow path of the valve, characterized in this that a throttle body (24) is arranged in the inlet passage (4c, 15, 1b) adjustable against a spring loading by the internal pressure in the direction of flow, which defines the throttle with the wall (4b) of the inlet flow passage (4c), the throttle body (24) and/or the wall (4b) having such a shape that with increasing displacement of the throttle body (24) in the direction of flow the throttling action continuously increases and/or increases in steps.

2. Safety-valve according to claim 1, characterized in this that the continuous or stepwise increase of the throttle action is provided by corresponding reduction of the inlet flow passage (4c, 15, 1b) and/or narrowing of the throttle body (24).

3. Valve according to claim 1 or claim 2 with a signal piston (5) displaceable within the valve body (4) by increasing steam pressure against a spring (17), characterized in this that the throttle body (24) is mounted on the signal piston (5).

4. Valve according to claim 3, characterized in this that the throttle body (24) is in one piece with the signal piston (5).

5. Valve according to one of claims 1 to 4, characterized in this that the inflow passage (4c) is formed at least in part by a tubular extension (4b) on the valve body (4), which is guided with a small clearance in the valve housing (1) and which has openings (15) leading to the valve seat (8) disposed behind the throttle.

6. Valve according to claim 3, with a stem section (21) of the signal piston (5) displaceable in the valve body (4) with a sliding fit, characterized in this that the signal piston (5) has a section (23) of reduced diameter at the end of the stem section (21) adjacent the cooker and extending therefrom to the widening out throttle body (24).

## Revendications

1. Soupape de sécurité pour autocuiseur, comportant un siège (8) ménagé dans une enveloppe (1) ; un ou plusieurs canaux d'admission (4c, 15, 1b) situés d'un côté dudit siège (8) et un ou plusieurs canaux d'évacuation (1a, 9) situés de l'autre côté dudit siège (8) ; un corps (4) qui, monté élastiquement et mobile en direction dudit siège (8), est soulevé à l'écart dudit siège (8) par la pression interne, après avoir surmonté l'action d'un ressort (16) ; ainsi qu'un mécanisme d'étranglement monté sur le trajet parcouru par le fluide traversant ladite soupape, soupape caractérisée par le fait que le canal d'admission (4c, 15, 1b) loge un organe ou bloc d'étranglement (24) qui, déplaçable par la pression interne dans le sens du débit, à l'encontre de l'action d'un ressort, coopère avec la paroi (4b) dudit canal d'admission (4c) pour former un étranglement, ledit bloc (24) et éventuellement ou en variante ladite paroi (4b) présentant une forme telle que, lorsque le déplacement dudit bloc (24) dans le sens du débit se poursuit, l'effet d'étranglement augmente continûment et éventuellement ou en variante graduellement.

2. Soupape de sécurité selon la revendication 1, caractérisée par le fait que l'augmentation continue ou progressive de l'effet d'étranglement est obtenue par un rétrécissement correspondant du canal d'admission (4c, 15, 1b) et éventuellement ou en variante par une décroissance de section du bloc d'étranglement (24).

3. Soupape de sécurité selon l'une des revendications 1 et 2, comportant un piston témoin (5) déplaçable dans son corps (4) par la pression de vapeur croissante, à l'encontre de l'action d'un ressort (17), soupape caractérisée par le fait que le bloc d'étranglement (24) est solidaire dudit piston témoin (5).

4. Soupape de sécurité selon la revendication 3, caractérisée par le fait que le bloc d'étranglement (24) forme un seul bloc avec le piston témoin (5).

5. Soupape de sécurité selon l'une quelconque des revendications 1 à 4, caractérisée par le fait que le canal d'admission (4c) est constitué, au moins en partie, par un prolongement tubulaire (4b) du corps (4), qui est logé avec un faible jeu dans l'enveloppe (1) de ladite soupape et comporte des évidements (15) situés derrière la zone d'étranglement et communiquant avec le siège (8) de ladite soupape.

6. Soupape de sécurité selon la revendication 3, dans laquelle un tronçon (21) de la tige du piston témoin (5) est mobile dans son corps (4), par un ajustement coulissant, soupape caractérisée par le fait que ledit piston témoin (5) présente un tronçon (23) de diamètre réduit, adjacent à l'extrémité dudit tronçon (21) de la tige proche du récipient, le bloc d'étranglement (24) élargi partant de ce tronçon de diamètre réduit.

fig.1

fig.2